# EUROPÄISCHE PATENTSCHRIFT

(11) **EP 0 624 619 B1**
(45) Veröffentlichungstag und Bekanntmachung des Hinweises auf die Patenterteilung: **17.12.1997**
(21) Anmeldenummer: 94106757.1
(22) Anmeldetag: 29.04.1994
(51) Int. Cl.: C08J 9/00, C08L 75/04, C08G 18/36

(54) **Harte hydrophobe Polyurethane**
Rigid hydrophobic polyurethanes
Polyuréthanes rigides hydrophobes

(30) Priorität: 12.05.1993 DE 4315841
(43) Veröffentlichungstag der Anmeldung: 17.11.1994
(73) Patentinhaber: BAYER AG, 51368 Leverkusen (DE)
(72) Erfinder: Müller, Hanns-Peter, Dr., D-51519 Odenthal (DE); Sirinyan, Kirkor, Dr., D-51467 Bergisch Gladbach (DE); Kapps, Manfred, Dr., D-51467 Bergisch Gladbach (DE)

(56) Entgegenhaltungen:
- DE-A- 3 530 754
- DE-C- 3 837 351
- FR-A- 2 176 928
- US-A- 3 248 349
- US-A- 3 432 451
- US-A- 3 558 531

## Beschreibung

Die Erfindung betrifft neue hydrophobe, harte Polyurethane, insbesondere Polyurethan-(PUR)-Hartschaumstoffe.

Werkstoffe auf Basis von Polyurethanen sind seit langem bekannt (s. beispielsweise G. Oertel, "Polyurethane", Kunststoff-Handbuch, Georg Thieme Verlag Stuttgart - New York (1987)). In diesem Zusammenhang sei beispielsweise auch auf PUR-Gießharze, PUR-Weich- und Hartschaumstoffe hingewiesen. PUR-Schaumstoffe sind vernetzte Polyurethane. Hartschaumstoffe sind meistens geschlossenzellige und Weichschaumstoffe vornehmlich offenzellige Werkstoffe. Hartschaumstoffe werden in der Regel durch den Zusatz eines flüssigen, niedrigsiedenden Treibmittels, bisher insbesondere des Fluor-trichlor-methans, auf physikalischem Wege hergestellt (vgl. hierzu G. Oertel, "Polyurethane", Kunststoff-Handbuch, Georg Thieme Verlag Stuttgart - New York (1987)). Fluor-Chlor-Kohlenwasserstoffe werden jedoch als umweltbelastend angesehen. Aus diesem Grund wird versucht, diese Verbindungsklasse durch niedrigsiedende Kohlenwasserstoffe wie n-Pentan oder n-Hexan zu ersetzen (vgl. hierzug G. Heilig, Kunststoffe, 81, S. 622 (1991)). Bekannterweise sind niedrigsiedende Kohlenwasserstoffe leicht brennbare Flüssigkeiten. Das Arbeiten mit niedrigsiedenden Kohlenwasserstoffen erfordert daher oft zusätzliche, kostspielige Explosionsschutzmaßnahmen.

PUR-Matrices sind in gewissen Grenzen hydrophile Systeme. Nach Literaturangaben gehen -NH-CO-O- und -NH-CO-NH-Bindungen mit den Wassermolekülen eine relativ starke, physikalische Wechselwirkung ein und ermöglichen dadurch eine Wasser-Diffusion im Innern der PUR-Matrix (vgl. beispielsweise V. Gajewski, Proceeding of the SPI-33rd Annual Technical/Marketing Conference, S. 506, Technomic Publishing Co., Inc. Pennsylvania (1990)).

Die (in der Regel unerwünschte) Wasser-Diffusion in die PUR-Matrix kann
- o: zu einer Reduzierung der Hydrolysebeständigkeit,
- o: zu einer Reduzierung der thermischen und elektrischen Isolationseigenschaften,
- o: zur Verschlechterung der mechanischen Eigenschaften, insbesondere der Dimensionsstabilität bzw. des Schrumpfverhaltens, und
- o: zu einer Erhöhung der Gasdurchlässigkeit, z.B. von CO₂ und O₂, führen.

Die US-A- 3 432 451 beschreibt Polyolefin-modifizierte Polyurethane, die erhalten werden durch Umsetzung von Polyisocyanaten mit Hydroxylgruppen-haltigen Fettsäureestern oder Umesterungsprodukten natürlicher Öle(Glyceride) mit mehrvertigen Alkoholen sowie Polyolefinen.

Der Erfindung lag die Aufgabe zugrunde, besonders hydrophobe harte Polyurethane und insbesondere PUR-Hart-schaumstoffe zu entwickeln, die sich durch Schrumpffreiheit, Dimensionsstabilität, Hydrolysestabilität, hervorragendes Langzeitverhalten und sehr gute Isolationseigenschaften auszeichnen. Die PUR-Hartschaumstoffe sollten durch Zusatz von Wasser als Treibmittel erhalten werden, geschlossenzellig sein und die bereits erwähnten vorteilhaften Eigenschaften aufweisen.

Diese Aufgabe wird überraschenderweise dadurch gelöst, indem man Polyisocyanate mit einer speziellen Polyolmischung bestehend aus
a) speziellen OH-funktionellen Triglyceriden oder Sorbitanestem
b) nicht-funktionellen oligomeren Polyolefinen und gegebenenfalls
c) speziellen Polyolen
zu Polyurethanen umsetzt.

Es war äußerst überraschend, daß durch Einsatz der erfindungsgemäßen Polyolabmischungen stark hydrophobe Polyurethane erhalten werden, obwohl ihre Matrices weiterhin durch Bildung von polaren -NH-CO-O- und -NH-CO-NH- Verknüpfungen charakterisiert sind.

Gegenstand der Erfindung sind harte Polyurethane, erhältlich durch Umsetzung von
1. Polyisocyanaten mit
   2. einem Polyolgemisch, bestehend aus
   a) - OH-funktionellen Triglyceriden der natürlichen Fettsäuren oder Sorbitan estern auf Basis von C₉-C₂₂-Fettsäuren
   b) - nicht-funktionellen oligomeren Polyolefinen vom Molekulargewicht 700-6000 und gegebenenfalls
   c) - mindestens difunktionellen Polyolen vom Molekulargewicht 62-8000, vorzugsweise vom Molekulargewicht 62-400, die von der Komponente 2a) unterschiedlich sind,
   gegebenenfalls in Gegenwart von physikalischen oder chemischen Treibmitteln
3. vorzugsweise Wasser und
4. in der PUR-Chemie an sich bekannten Hilfs- und Zusatzmitteln. Erfindungsgemäß bevorzugt ist, daß
   - die Komponente 2b) ein nicht-funktionelles Polyisobuten oder Polypropylen ist,
   - die Komponente 2b) ein nicht-funktionelles Polybutadien ist,
   - die Komponente 2b) ein nicht-funktionelles Polyisopren ist,
   - die Komponente 2b) ein nicht-funktionelles Polybutylen ist,
   - die Komponente 2a) in einer Menge von 1-80 Gew.-% im Polyolgemisch 2) enthalten ist,
   - die Komponente 2b) in einer Menge von 5-80 Gew.-X im Polyolgemisch 2) enthalten ist und
   - die Komponente 2c) in einer Menge von 0-80 Gew.-X im Polyolgemisch 2) enthalten ist, wobei die Summe der Komponenten 2a), 2b) und 2c) 100 Gew.-X beträgt.

Erfindungsgemäß bevorzugt sind harte, hydrophobe Polyurethanschaumstoffe.

Die Erfindung betrifft auch die Verwendung der harten, hydrophoben Polyurethanschaumstoffe als Isolationsmaterialien in der Kältetechnik, im Bau-, Automobil-, Schiffbau- und/oder Elektronikbereich.

Ausgangsmaterialien für die harten, hydrophoben Polyurethane sind:
1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   n = 2-4, vorzugsweise 2 und 3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4"- Diphenylmethandiisocyanat ableiten.
2. Ein spezielles Polyolgemisch, bestehend aus
   a) OH-funktionellen Triglyceriden der natürlichen Fettsäuren oder Sorbitan estern auf Basis von C₉-C₂₂-Fettsäuren.
      Diese sind an sich bekannte Verbindungen und basieren aüf nachwachsenden Rohstoffen.
      Die Definition "nachwachsender Rohstoffe" kann beispielsweise der Literatur "Nachwachsende Rohstoffe und ihre Verwendung", AIO (Auswertungs- und Informationsdienst für Ernährung, Landwirtschaft und Forsten (AIO) 5300 Bonn (1992)) entnommen werden. In diesem Zusammenhang sei beispielsweise auf Sorbitanester der aliphatischen langkettigen, organischen Säuren hingewiesen.
      Es ist bekannt, daß Triglyceride der ungesättigten Fettsäuren nach dem in situ-Perameisensäure-Verfahren epoxidiert und durch die anschließende Umsetzung mit Alkoholen oder Säuren mit OH-Gruppen versehen werden können (vgl. hierzu B. Gruber et al. Fett Wissenschaft Technologie, 89, 147 (1987) und R. Höfe, Phänomen Farbe, 4, S. 55 (1992)).
      Erfindungsgemäß werden vorzugsweise OH-funktionelle Triglyceride der 9-Hexadecensäure (Palmitinsäure), 9-Octadecensäure (Ölsäure), 9,12-Octadecadiensäure (Linolsäure), 9,12,15-Octadecatriensäure (Linolensäure), 9,11,13-Octa-decatriensäure (Holzöl) und ferner 12-Hydroxy-9-octadecensäure (Ricinolsäure) bzw. deren Mischungen untereinander verwendet.
      Ihre Menge beträgt im Polyolgemisch in der Regel 1 - 80 Gew.-%.
      Die OH-Zahl (s. hierzu Hydroxylzahl, H. Kittel, Farben- Lack- und Kunststoff-Lexikon, Wiss. Verlagsgesellschaft M.B.H. Stuttgart (1952)) der genannten Polyester liegt in der Regel im Bereich von 50 bis 600.
      Selbstverständlich können auch Abmischungen der genannten Polyole verwendet werden.
   b) Oligomere Polyolefine vom Molekulargewicht 700-6000, die frei von funktionellen Gruppen, z.B. OH-, COOH oder NH₂-Gruppen, sind.
      Es handelt sich hierbei ebenfalls um an sich bekannte Verbindungen auf Basis Isobuten, Butadien, Isopren und Propylen. Zur Herstellung der erfindungsgemäßen hydrophoben PUR-Hartschäume werden oligomere Polyolefine auf Basis Isobuten und Propylen oder deren Mischungen bevorzugt eingesetzt. Die zur Herstellung der erfindungsgemäßen PUR-Schaumstoffe eingesetzten oligomeren Polyolefine haben Molekulargewichte im Bereich zwischen 700-6000.
   c) Die mindestens difunktionellen Polyole vom Molekulargewicht 62-8000 sind unterschiedlich von der Komponente 2a) und sind vorzugsweise Polyetherpolyole oder niedermolekulare Polyole vom Molekulargewicht 62-400 wie Glycerin, Trimethylolpropan oder Butandiol; ferner höherfunktionelle Alkylenoxidaddukte, vor allem solche mit Startern auf Naturstoffbasis wie Sorbit, Saccharose, Glucose und Glycerin (vgl. beispielsweise DE-OS 2.639.083, US 2.990.376, DE-O 2.639.083, 2.639.084, 2.714.084, 2.714.104, 2.721.186, 2.721.093, 2.732.077, 2.738.154, 2.738.512, 2.756.270, 2.808.228 und 2.831.659). Als Epoxide für den Aufbau von Polyetherpolyolen kommen in erster Linie Propylenoxid und/oder Ethylenoxid in Betracht. Da Propylenoxid bei der alkalisch katalysierten Polyaddition sekundäre OH-Gruppen, Ethylenoxid dagegen primäre OH-Gruppen liefert und letztere reaktiver gegenüber Isocyanatgruppen sind, kann über die Art des Epoxids das Aktivitätsverhalten des Polyethers vorbestimmt werden. Durch die stufenweise Polyaddition von Propylen- und Ethylenoxid lassen sich Segmente aus dem ein oder anderen Epoxid gezielt an definierten Stellen in die Ketten einbauen. Damit können die Eigenschaften des Polyols - neben der Aktivität auch Viskosität, Hydrophilie und Verträglichkeit mit den erwähnten OH-funktionellen Polyestern (Komponente 2a)) und oligomeren Polyolefinen (Komponente 2b))-in gewünschter Weise gesteuert werden.

   Die Mengen der Polyole 2c) in der Polyolmischung beträgt in der Regel 0 bis 80 Gew.-% (bezogen auf die gesamte Polyolmischung).
   Die OH-Gruppen der genannten Polyole können auch gegebenenfalls durch Aminogruppen teilweise oder vollständig ersetzt sein. Es ist bekannt, daß man als Starter bei der Herstellung von Polyethern aliphatische Amine, wie z.B. Ethylendiamin, als auch aromatische Amine, z.B. Diaminotoluol oder Diaminodiphenylmethan einsetzt. Hierzu finden auch Aminoalkohole Verwendung. Derartige stickstoffhaltige Polyole werden aufgrund ihrer hohen Aktivität oft in Hartschaumrezepturen benutzt (vgl. hierzu G. Oertel, "Polyurethane", Kunststoff-Handbuch, S. 18, Georg Thieme Verlag Stuttgart - New York (1987)).
3. Als Treibmittel kommen leicht siedende, sowohl halogenierte als auch halogenfreie Kohlenwasserstoffe in Frage. In diesem Zusammenhang sei auf Fluor-trichlormethan, Hexafluorethan, n-Pentan, Butan, Cyclopentan, n-Hexan, Waschbenzin, deren Mischungen untereinander und deren Emulsionen oder Dispersionen mit Wasser hingewiesen (vgl. hierzu G. Heilig, Kunststoffe, 81, S. 622 (1991)).
4. Als Treibmittel wird vorzugsweise Wasser eingesetzt.
5. Gegebenenfalls werden Hilfs- und Zusatzmittel mitverwendet wie
   a) weitere leicht flüchtige organische Substanzen als zusätzliche Treibmittel,
   b) Katalysatoren der an sich bekannten Art in Mengen von bis zu 10 Gew.-%, bezogen auf die Mengen an Komponente 2,
   c) oberflächenaktive Zusatzstoffe, wie Emulgatoren und Schaumstabilisatoren,
   d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trikresylphosphat, ferner Stabilisatoren gegen Al-terungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-HanserVerlag, München 1966, z.B. auf den Seiten 103-113 beschrieben.

Die harten PUR-Schaumstoffe werden in an sich bekannter Weise hergestellt.

Durchführung des Verfahrens zur Herstellung von Polyurethanen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z,B, auf den Seiten 121 bis 205, beschrieben.

Die Schaumstoffe können z.B. durch Blockverschäumung oder nach dem an sich bekannten Doppeltransportbandverfahren hergestellt werden.

Unter hydrophoben PUR-Hartschaumstoffen sind solche zu verstehen, die nach ihrer Präparierung (vgl. hierzu Ausführungsbeispiele) eine Wasseraufnahme in 100 X Wassergesättigter Atmosphäre bei 30°C bis zum Erreichen der Sättigung (Massenkonstanz) < 3,5 %, vorzugsweise < 3,25 % und ganz besonders bevorzugt < 2,9 % aufweisen,

Ohne den Umfang der Erfindung einzuschränken sei darauf hingewiesen, daß die erfindungsgemäßen PUR-Hartschaumstoffe eine Rohdichte zwischen 25-85 m³/kg aufweisen sollen, wobei in besonderen Fällen diese Grenzen beliebig nach unten oder nach oben variiert werden können.

Die erfindungsgemäß verwendeten Polyolmischungen eignen sich hervorragend zur Herstellung von Wasser-getriebenen, schrumpffreien, geschlossenzelligen, relativ CO₂-und O₂-undurchlässigen PUR-Hartschaumstoffen.

Die so erhaltenen harten, hydrophoben, offenzelligen oder insbesondere geschlossenzelligen PUR-Schaumstoffe können im Tief- und Hochbau-, Automobil-, Verpackungs-, Haushalts-oder Schiffbau- und Elektrosektor bzw. in der Kühltechnik eingesetzt werden. Ferner sind sie hervorragend zur Herstellung von Dämmplatten, PUR-Integralschaumstoffen und Sandwichelementen geeignet. Sie können problemlos zur Innenraumverkleidung und Hohlraumausschäumung eingesetzt werden. Dabei ist grundsätzlich die Herstellung von hydrophoben Hart- und Halbhartschaumstoffen möglich. Eine Verarbeitung zu massiven Werkstoffen nach den bekannten Gießverfahren - gegebenenfalls unter Druck - ist ebenso möglich wie eine Verarbeitung in der bekannten RIM- und RRIM-Technologie. Eine nachträgliche Warmverformung ist ebenfalls mit den erfindungsgemäßen Polyurethanen möglich.

Die vorliegende Erfindung wird anhand der nachfolgenden Ausführungsbeispiele näher erläutert. Alle Prozentangaben bedeuten Gew.-%.

### Beispiel 1

Eine PUR-Mischung, bestehend aus

| | |
|---|---|
| 40,0 Gew.-Teilen | handelsüblichem, oligomerem Polyisobuten des Tpys Oppanol B3 der Fa. BASF AG, mit der Molmasse von 800-1000 g/mol, |
| 40,0 Gew.-Teilen | fettchemischer Polyol auf Basis von Glycerin (Sovermol® Pol/I; Henkel KGaA), |
| 11,7 Gew.-Teilen | Glycerin, |
| 5,0 Gew.-Teilen | Wasser, |
| 1,3 Gew.-Teilen | Siliconstabilisator des Typs 1836 (Bayer AG), |
| 3,0 Gew.-Teilen | Dimethylbenzylamin, |
| 170,0 Gew.-Teilen | Desmodur® 44 V 20, ein Roh-MDI (BAYER AG) |

wird bei Raumtemperatur unter starkem Rühren vermischt. Anschließend wird das flüssige, noch nicht sichtbar schäumende Gemisch in einen Papierkasten mit den Maßen 25 x 13 x 13 cm eingebracht und unter Selbsterwärmung aufgeschäumt.

Die Steigzeit der PUR-Mischung beträgt ca. 150 Sek. Nach weiteren 240 Sek. erreicht der Schaumstoff eine ausreichende Festigkeit und ist problemlos handbarbar. Der entstandene Hartschaumstoff weist eine Blockhöhe von ca. 21 cm auf und besitzt eine Rohdichte von 44 kg/m³.

Er ist stark hydrophob, dimensionsstabil und nach Lagerung von mehreren Wochen schrumpffrei. Seine Wasseraufnahme liegt bei ca. 2,4 %.

Die Wasseraufnahme der Probe wurde gravimetrisch ermittelt.

### Vergleichsbeispiel 1a

Ein PUR-Reaktionsgemisch bestehend aus

| | |
|---|---|
| 48,0 Gew.-Teilen | oligomerem Polyisobuten nach Beispiel 1 |
| 48,0 Gew.-Teilen | Desmophen® 4012, ein Polyol auf Basis Trimethylolpropan und Propylenoxid (Bayer AG), OH-Zahl 380 |
| 14,4 Gew.-Teilen | Glycerin |
| 6,0 Gew.-Teilen | Wasser |
| 3,6 Gew.-Teilen | Desmorapid® DB und |
| 1,5 Gew.-Teilen | Siliconstabilisator gemäß Beispiel 1 |

wird nach Beispiel 1 verrührt. Man bekommt eine hochviskose Polyolmischung. Diese Mischung ist nicht mit der Polyisocyanatkomponente (Desmodur 44 V 20) mischbar bzw. läßt sich nicht zu einem PUR-Hartschaumstoff verarbeiten.

### Vergleichsbeispiel 1b

Ein PUR-Reaktionsgemisch nach Beispiel 1, bestehend aus

| | |
|---|---|
| 100,0 Gew.-Teilen | Desmophen® 4012, ein Polyetherpolyol aus Trimethylolpropan und Propylenoxid (Bayer AG), OH-Zahl 380 |
| 6,0 Gew.-Teilen | Wasser |
| 3,6 Gew.-Teilen | Desmorapid® DB |
| 1,6 Gew.-Teilen | Siliconstabilisator gemäß Beispiel 1 und |
| 197,8 Gew.-Teilen | Desmodur® 44 V 20 |

wird nach Beispiel 1 aufgeschäumt. Man erhält einen geschlossenzelligen PUR-Hartschaumstoff mit einer Steigzeit von 60 Sek. und einer Blockhöhe von ca. 21 cm. Er weist eine Rohdichte von 41 kg/m³ auf. Er ist relativ hydrophil und seine Wasseraufnahme liegt bei 4,2 %.

### Vergleichsbeispiel 1c

Eine PUR-Mischung, bestehend aus

| | |
|---|---|
| 40,0 Gew.-Teilen | handelsüblichem, oligomerem Polyolefin, ein Gemisch aus C₂₀-Isoparaffinen mit max. 10 % C₁₆-Isoparaffinen auf Basis von Isobuten, mit der Molmasse von ca. 280-300 g/mol des Typs IEK (Isoeikosan) der Fa. EC Erdölchemie GmbH, |

| | |
|---|---|
| 40,0 Gew.-Teilen | fettchemischem Polyol nach Beispiel 1, |
| 11,7 Gew.-Teilen | Glycerin, |
| 5,0 Gew.-Teilen | Wasser, |
| 1,3 Gew.-Teilen | Siliconstabilisator nach Beispiel 1, |
| 3,0 Gew.-Teilen | Dimethylbenzylamin |
| 170,0 Gew.-Teilen | Desmodiur® 44 V 20, ein Roh-MDI (BAYER AG) |

wird bei Raumtemperatur unter starkem Rühren vermischt. Man bekommt eine homogene PUR-Mischung. Diese Mischung läßt sich nicht zu einem PUR-Hartschaumstoff verarbeiten. Sie kollabiert im Verlaufe von 120 Sek. zu einer relativ kompakten, mittelporösen, spröden Masse. Ihre Blockhöhe liegt bei ca. 1,5 cm.

### Beispiel 2

Eine PUR-Mischung, bestehend aus

| | |
|---|---|
| 40,0 Gew.-Teilen | oligomerem Polyisobuten nach Beispiel 1, |
| 28,6 Gew.-Teilen | fettchemischem Polyol auf Basis von Larylsäuresorbitanester mit einer OH-Zahl 350, |
| 11,7 Gew.-Teilen | Glycerin, |
| 5,0 Gew.-Teilen | Wasser, |
| 1,3 Gew.-Teilen | Siliconstabilisator nach Beispiel 1, |
| 3,0 Gew.-Teilen | Dimethylbenzylamin, |
| 170,0 Gew.-Teilen | Desmodur® 44 V 20, ein Roh-MDI (Bayer AG) |

wird bei Raumtemperatur unter starkem Rühren vermischt. Anschließend wird das flüssige, noch nicht sichtbar schäumende Gemisch in einen Papierkasten mit Maßen 25x13x13 cm eingebracht und unter Selbsterwärmung aufgeschäumt.

Die Steigzeit der PUR-Mischung beträgt ca. 160 Sek. Nach weiteren 250 Sek. erreicht der Schaumstoff eine ausreichende Festigkeit.

Der entstandene Hartschaumstoff weist eine Blockhöhe von ca. 21 cm auf und besitzt eine Rohdichte von ^{∼} 44 kg/m³.

Er ist hydrophob, dimensionsstabil und nach Lagerung von mehreren Wochen schrumpffrei. Seine Wasseraufnahme liegt bei ca. 2,5 %. Die Wasseraufnahme der Probe wurde gravimetrisch nach Beispiel 1 ermittelt.

## Patentansprüche

1. Harte Polyurethane, erhältlich durch Umsetzung von
1. Polyisocyanaten mit
2. einem Polyolgemisch, bestehend aus
a) - OH-funktionellen Triglyceriden der natürlichen Fettsäuren oder Sorbitanestern auf Basis von C₉-C₂₂-Fettsäuren
b) - nicht-funktionellen oligomeren Polyolefinen vom Molekulargewicht 700 - 6 000 und gegebenenfalls
c) - mindestens difunktionellen Polyolen vom Molekulargewicht 62-8000, vorzugsweise vom Molekulargewicht 62 - 400, die von der Komponente 2a) unterschiedlich sind,
gegebenenfalls in Gegenwart von physikalischen und chemischen
3. Treibmitteln, vorzugsweise Wasser, und
4. in der PUR-Chemie an sich bekannten Hilfs- und Zusatzmitteln.

2. Harte Polyurethane gemäß Anspruch 1, dadurch gekennzeichnet, daß die Komponente 2b) ein nicht-funktionelles Polyisobuten oder Polypropylen ist.

3. Harte Polyurethane gemäß Anspruch 1, dadurch gekennzeichnet, daß die Komponente 2b) ein oligomeres Polyolefin von Molekulargewicht 700 - 6 000 ist.

4. Harte Polyurethane gemäß Anspruch 1 und 3, dadurch gekennzeichnet, daß die Komponente 2b) ein nicht-funktionelles Polyisopren und/oder Polybutylen und/oder Polybutadien ist.

5. Harte Polyurethane gemäß Ansprüchen 1 bis 4, dadurch gekennzeichnet, daß die Komponente 2a) in einer Menge von 1 - 80 Gew.-% im Polyolgemisch 2) enthalten ist (wobei die Summe der Komponenten 2a), 2b) und 2c) 100 Gew.-% beträgt.

6. Harte, hydrophobe Polyurethane gemäß Ansprüchen 1 bis 4, dadurch gekennzeichnet, daß die Komponente 2b) in einer Menge von 5 - 80 Gew.-% im Polyolgemisch 2) vorliegt (wobei die Summe der Komponenten 2a), 2b) und 2c) 100 Gew.-% beträgt).

7. Harte Polyurethane gemäß Ansprüchen 1 bis 4, dadurch gekennzeichnet, daß die Komponente 2c) in einer Menge von 0 - 80 Gew.-% im Polyolgemisch enthalten ist (wobei die Summe der Komponenten 2a), 2b) und 2c) 100 Gew.-% beträgt).

8. Harte, hydrophobe Polyurethanschaumstoffe gemäß Ansprüchen 1 bis 7.

9. Verwendung der harten, hydrophoben Polyurethanschaumstoffe gemäß Anspruch 8 als Isolationsmaterialien in der Kältetechnik, im Bau-, Automobil-, Schiffbau- und/oder Elektronikbereich.

## Claims

1. Rigid polyurethanes obtainable by reacting
1. polyisocyanates with
2. a polyol mixture consisting of
a) - OH-functional triglycerides of natural fatty acids or sorbitan esters based on C₉-C₂₂ fatty acids
b) - non-functional oligomeric polyolefins of a molecular weight of 700-6000 and optionally
c) - at least difunctional polyols of a molecular weight of 62 to 8000, preferably of a molecular weight of 62 to 400, which differ from component 2a),
optionally in the presence of physical and chemical
3. blowing agents, preferably water, and
4. auxiliary substances and additives known *per se* in PUR chemistry.

2. Rigid polyurethanes according to claim 1, characterised in that component 2b) is a non-functional polyisobutene or polypropylene.

3. Rigid polyurethanes according to claim 1, characterised in that component 2b) is an oligomeric polyolefin of a molecular weight of 700 to 6000.

4. Rigid polyurethanes according to claims 1 and 3, characterised in that component 2b) is a non-functional polyisoprene and/or polybutylene and/or polybutadiene.

5. Rigid polyurethanes according to claims 1 to 4, characterised in that component 2a) is present in the polyol mixture 2) in a quantity of 1 to 80 wt.% (wherein the sum of components 2a), 2b) and 2c) is 100 wt.%).

6. Rigid, hydrophobic polyurethanes according to claims 1 to 4, characterised in that component 2b) is present in the polyol mixture 2) in a quantity of 5 to 80 wt.% (wherein the sum of components 2a), 2b) and 2c) is 100 wt.%).

7. Rigid polyurethanes according to claims 1 to 4, characterised in that component 2c) is present in the polyol mixture in a quantity of 0 to 80 wt.% (wherein the sum of components 2a), 2b) and 2c) is 100 wt.%)

8. Rigid, hydrophobic polyurethane foams according to claims 1 to 7.

9. Use of the rigid, hydrophobic polyurethane foams according to claim 8 as insulation materials in refrigeration applications and in the construction, automotive, shipbuilding and/or electronics industries.

## Revendications

1. Polyuréthanes rigides obtenus par réaction de
1. des polyisocyanates avec
2. un mélange de polyols consistant en
a) des triglycérides d'acides gras naturels, à fonctions OH, ou des esters de sorbitanne à base d'acides gras en C₉-C₂₂,
b) des polyoléfines oligomères non fonctionnelles de poids moléculaire 700 à 6 000 et le cas échéant
c) des polyols au moins difonctionnels de poids moléculaire 62 à 8 000, de préférence 62 à 400, différents de ceux du composant 2a),
éventuellement en présence de
3. des agents porogènes physiques et chimiques, de préférence l'eau et
4. des produits auxiliaires et additifs connus en soi dans la chimie des polyuréthanes.

2. Polyuréthanes rigides selon la revendication 1, caractérisés en ce que le composant 2b) est un polyisobutène ou polypropylène non fonctionnel.

3. Polyuréthanes rigides selon la revendication 1, caractérisés en ce que le composant 2b) est une polyoléfine oligomère de poids moléculaire 700 à 6 000.

4. Polyuréthanes rigides selon les revendications 1 et 3, caractérisés en ce que le composant 2b) est un polyisoprène et/ou polybutylène et/ou polybutadiène non fonctionnels.

5. Polyuréthanes rigides selon les revendications 1 à 4, caractérisés en ce que le composant 2a) est contenu en quantité de 1 à 80 % en poids dans le mélange de polyols 2), la somme des composants 2a), 2b) et 2c) représentant 100 % en poids.

6. Polyuréthanes rigides selon les revendications 1 à 4, caractérisés en ce que le composant 2b) est présent en quantité de 5 à 80 % en poids dans le mélange de polyols 2), la somme des composants 2a), 2b) et 2c) représentant 100 % en poids.

7. Polyuréthanes rigides selon les revendications 1 à 4, caractérisés en ce que le composant 2c) est contenu en quantité de 0 à 80 % en poids dans le mélange de polyols, la somme des composants 2a), 2b) et 2c) représentant 100 % en poids.

8. Mousses de polyuréthanes rigides hydrophobes selon les revendications 1 à 7.

9. Utilisation des mousses de polyuréthanes rigides hydrophobes selon la revendication 8 en tant que matériaux isolants dans l'industrie du froid, le bâtiment, l'industrie automobile, la construction navale et/ou l'électronique.
